# EUROPÄISCHE PATENTSCHRIFT

(11) **EP 0 864 068 B1**
(45) Veröffentlichungstag und Bekanntmachung des Hinweises auf die Patenterteilung: **02.02.2000**
(21) Anmeldenummer: 96941625.4
(22) Anmeldetag: 29.11.1996
(51) Int. Cl.: F24F 5/00, F24J 3/08

(54) **VORRICHTUNG UND VERFAHREN ZUM BEHANDELN UND GEWINNEN VON FRISCHLUFT**
DEVICE AND METHOD FOR TREATING AND PRODUCING FRESH AIR
DISPOSITIF ET PROCEDE DE TRAITEMENT ET DE PRODUCTION D'AIR FRAIS

(30) Priorität: 01.12.1995 DE 29519093 U
(43) Veröffentlichungstag der Anmeldung: 16.09.1998
(73) Patentinhaber: Merkl, Rupert, Dipl.-Ing., 86956 Schongau (DE)
(72) Erfinder: Merkl, Rupert, Dipl.-Ing., 86956 Schongau (DE)
(74) Vertreter: Weiss, Ursula, Dr.
(86) Internationale Anmeldenummer: EP9605298
(87) Internationale Veröffentlichungsnummer: WO9721059

(56) Entgegenhaltungen:
- DE-A- 3 222 400
- US-A- 2 828 681
- US-A- 4 355 683

## Beschreibung

### Gebiet der Erfindung

Die Erfindung betrifft eine Vorrichtung sowie ein Verfahren zum Behandeln und Gewinnen von Frischluft in einer Luftfördereinrichtung.

Bei der Luftkonditionierung in Klimaanlagen wird angesaugte Außenluft auf die jeweils gewünschte Temperatur temperiert, d.h. erwärmt oder gekühlt sowie gezielt durch das Befeuchten oder Trocknen auf eine jeweils gewünschte relative Luftfeuchtigkeit eingestellt.

Insbesondere das Kühlen von Luft erfordert einen sehr hohen Energieeinsatz in Form von elektrischem Strom oder fossilen Brennstoffen. Zudem müssen den Luftkonditionierungsvorrichtungen häufig Reinigungs- und Filtereinrichtungen nachgeschaltet werden, in denen eine weitere Behandlung der Luft in Form einer Staub- oder Pollenabscheidung stattfindet.

### Stand der Technik

Aus der US 2,828,681 ist eine Klimavorrichtung bekannt, die aus einem Luftsammelschacht besteht, der in seinem unteren Bereich von einer Kiesschüttung umgeben ist und Durchtrittsöffnungen aufweist, durch welche die Luft aus der umgebenden Kiesschüttung in den Luftsammelschacht eintreten können. Unmittelbar unterhalb der Erdoberfläche ist eine Bodenschicht mit sehr geringer Luftdurchlässigkeit angeordnet, die in einer ausreichenden Entfernung vom Luftsammelschacht entweder von Einströmrohren durchdrungen oder aber in ihrer Dicke entsprechend vermindert ist, so daß die Frischluft an gezielten Orten in das Bodengefüge eintritt und eine ausreichende Wegstrecke zum Luftsammelschacht zurücklegen muß. Die im Luftsammelschacht aufgefangene Frischluft wird anschließend durch ein Gebläse aus einer Luftabzugsleitung abgeführt. Das Bodengefüge wirkt als Wärmespeicher, der im Winter Temperatur an die hindurchströmende Luft abgibt, wobei diese erwärmt wird, und im Sommer Energie von der durchströmenden Luft aufnimmt, wodurch die Luft abgekühlt wird. Aufgrund der definierten Lufteintrittsstellen in das Bodengefüge und den Abzug der Frischluft direkt durch Öffnungen in den Wandungen des Luftsammelschachtes bilden sich definierte Migrationspfade der Frischluft im Boden aus, wobei ein großer Teil des vorhandenen Bodenvolumens ungenutzt bleibt.

### Darstellung der Erfindung

Der Erfindung liegt die Aufgabe zugrunde, eine Vorrichtung sowie ein Verfahren zum Behandeln und Gewinnen von Frischluft vorzuschlagen, die das vorhandene Bodenvolumen in bestmöglicher Weise ausnutzen und mit einem geringen Energieaufwand betrieben werden können.

Die Aufgabe der Erfindung wird durch eine Vorrichtung mit den Merkmalen des Patentanspruches 1 sowie ein Verfahren mit den Merkmalen des Patentanspruches 13 gelöst.

Der Erfindung liegt der Gedanke zugrunde, daß die Frischluft nach dem Durchströmen eines Bettes aus Feststoffpartikeln nicht direkt einem Luftsammelschacht zugeführt werden, sondern durch Lufteinlaßöffnungen in eine Vielzahl von langgestreckten Hohlelementen eindringen, wobei die langgestreckten Hohlelemente in den Luftsammelschacht münden.

Das Vorsehen von Lufteinlaßöffnungen in einer Mehrzahl von langgestreckten Hohlelementen besitzt den Vorteil, daß einerseits die durch den Boden strömende Frischluft an vielen verschiedenen, dezentralen Stellen aufgenommen wird und somit auch jeweils unterschiedliche Bodenvolumina von den einzelnen Teilluftströmen durchwandert werden, und andererseits, daß durch die vielen, dezentral angeordneten Lufteinlaßöffnungen allenfalls nur ein sehr geringer Volumenstrom an Luft eintritt, wodurch die Migrationsgeschwindigkeit der Luft im Boden sehr gering ist und die Verweildauer der Luft im Boden deutlich gegenüber der direkten Aufnahme in einem Luftsammelschacht erhöht werden kann, wodurch sich der gewünschte Wärmeaustausch verbessern läßt. Wenn sich im Boden bevorzugte Strömungspfade für die Luft ausbilden, liegt die Luftgeschwindigkeit im Bereich dieser Strömungspfade sehr viel höher und die gewünschte, lange Verweildauer im Boden kann nicht mehr erzielt werden.

Indem die Grenzfläche zum Luftraum, d.h. die Grenzfläche zwischen Boden mit dem darin befindlichen Bett aus Feststoffpartikeln und dem freien Luftraum, aus einem hochoberflächenbildenden Bewuchs gebildet ist, weist der Eintrittsbereich der angesaugten Luft in den Boden bzw. in das Bett aus Feststoffpartikeln eine sehr große Oberfläche auf. Beispielsweise im Falle eines Grasbewuchses läßt sich an warmen Tagen oder auch in warmen Klimazonen eine sehr gute Kühlwirkung des durch das Gras hindurchtretenden Luftstromes bewirken, weil der sich in der Nacht auf dem Gras absetzende Tau unter Abkühlung der Luft verdunstet wird.

Bevorzugte Ausführungsformen sind durch die übrigen Ansprüche gekennzeichnet.

Nach einer bevorzugten Ausführungsform sind die langgestreckten Hohlelemente perforierte Kunststoffrohre. Perforierte Kunststoffrohre sind kommerziell erhältlich und werden unter der Bezeichnung Drain-Rohre vertrieben. Zudem besitzt die Wahl von Kunststoff als Material den Vorteil, daß dieses chemisch resistent und unverrottbar ist und somit eine nahezu unbegrenzte Lebensdauer der Vorrichtung ermöglicht. Zuletzt besitzen abgerundete Formen den Vorteil, daß die sehr hohen Flächenlasten im Boden gut aufgenommen und verteilt werden können.

Vorzugsweise ist in der Luftabsaugleitung eine Luftförderanlage ein Ventilator angeordnet. Durch das Anordnen des Ventilators in der Luftabsaugleitung, deren Durchmesser wesentlich geringer als der Durchmesser des Luftsammelschachtes ist, läßt sich ein Ventilator mit geringerem Durchmesser einsetzen. Zudem ist durch die Anordnung in der Luftabsaugleitung der Ventilator in einen engeren räumlichen Kontakt zu einer nachgeschalteten Luftkonditionierungseinrichtung, durch welche der Betrieb des Ventilators geregelt wird.

Nach einer bevorzugten Ausführungsform ist die Luftabsaugleitung an einen Wärmetauscher einer Luftkonditionierungseinrichtung angeschlossen. Durch das Nachschalten einer Luftkonditionierungseinrichtung kann einerseits die Temperatur der Luft in der Luftabsaugleitung auf die gewünschte Raumtemperatur gebracht werden; zum anderen läßt sich eine gewünschte relative Luftfeuchte, die im Raumklima als angenehm empfunden wird, einstellen.

Vorzugsweise ist der Luftsammelschacht senkrecht zur Erdoberfläche orientiert in dem Bett aus Feststoffpartikeln aufgenommen. Dies besitzt den Vorteil, daß sich das obere Ende des Luftsammelschachtes im wesentlichen bis zur Erdoberfläche erstrecken kann, wodurch dieser für Inspektions- und Wartungsarbeiten leicht zugänglich wird.

Nach einer alternativen, bevorzugten Ausführungsform kann das obere Ende des Luftsammelschachtes mit einer in Abhängigkeit von der Außentemperatur zu öffnenden Abdeckung verschlossen sein, die im geöffneten Zustand den Zutritt von Außenluft in den Luftsammelschacht gestattet. Dieses Öffnen ist immer dann von Interesse, wenn auf die Staub-, Pollen- und Keimfreiheit der Luft kein Wert gelegt wird und die Außentemperatur der üblichen Temperatur der Luft in der Luftzuführleitung entspricht. Durch das Öffnen des Luftsammelschachtes verringert sich der Druckverlust der Luft auf nahezu Null und entsprechend verringert sich auch der für den Betrieb des Ventilators aufzuwendende Energieeinsatz.

Nach einer besonders bevorzugten Ausführungsform füllen die langgestreckten Hohlelemente eine Ebene, die im wesentlichen parallel zur Erdoberfläche verläuft, vollflächig aus. Unter dem Begriff vollflächig soll hier sowohl das direkte Aneinanderliegen der jeweils benachbarten Hohlelemente innerhalb der Ebene, als auch das Anordnen der Hohlelemente mit einem geringen Abstand zueinander, der vorzugsweise dem 1-fachen bis 3-fachen der Erstreckung der Hohlelemente quer zu ihrer Längserstreckung in der Ebene entspricht, verstanden werden. Diese vollflächige Anordnung der Hohlelemente in einer Ebene parallel zur Erdoberfläche besitzt den Vorteil, daß sich das gesamte Volumen des darüberliegenden Erdspeichers in bestmöglicher Weise ausnutzen läßt. Hierzu wird eine Vielzahl von Drainagerohren, beispielsweise 10 bis 20 Drainagerohre jeweils nach außen gerichtet von dem Luftsammelschacht als Zentrum ausgehend verlegt.

Nach einer alternativen, bevorzugten Ausführungsform ist eine Grundwasserpumpe vorgesehen, mit deren Hilfe Grundwasser in das Bett aus Feststoffpartikeln förderbar ist. Diese Ausführungsform der Erfindung kommt vorteilhafterweise immer dann zur Verwendung, wenn der Grundwasserspiegel sehr tief liegt und der Luftsammelschacht nicht bis nahe in den Bereich des Grundwassers hinab reicht. In diesem Fall findet nur ein unzureichender Wärmeaustausch zwischen dem Grundwasser und den darüberliegenden Bodenschichten statt, so daß durch die Befeuchtung des Bodens im Bereich der Drainagerohre Boden gekühlt oder angewärmt wird und zudem in trockenen Klimazonen Verdunstungskälte bei der Beladung der trockenen Luft mit Feuchtigkeit zur Verfügung gestellt wird.

Vorzugsweise weist das Bett aus Feststoffpartikeln eines oder mehrere der folgenden Feststoffbestandteile auf: Kies, Ziegelbruch, Ziegelsplit, Blähton und Lavasteine. Während Kies sehr billig erhältlich ist, besitzen die übrigen mineralischen und hochwasserspeichernden Materialien den Vorteil, daß diese jeweils eine große innere Oberfläche aufweisen, an welcher Wasser adsorptiv gebunden werden kann. Hierdurch besitzt der aus diesen Stoffen gebildete Erdspeicher eine sehr hohe Wasserkapazität und somit Feuchtigkeitsspeicherung; zum anderen besitzt Wasser eine sehr hohe Wärmekapazität, so daß sich die gesamte Wärmekapazität des Erdspeichers hierdurch erhöhen läßt. Schließlich besteht die Möglichkeit, daß während langandauernder Frostperioden mit dem Durchfrieren der oberen Bodenschichten Wasserbestandteile an und in den wasserspeichernden Materialien gefrieren, wodurch eine sehr hohe, zusätzliche Energiespeicherung eintritt. Zusätzlich werden Bakterien, Pollen oder andere Verunreinigungen in der Luft an die Feststoffe gebunden. Dies führt zu einem vollständigen Abbau von Keimen und Sporen, da beispielsweise Colibakterien in Schichten unter 2 m Tiefe nicht länger als 50 Tage überleben können und wegen Nahrungsmangel eingehen.

Ebenso werden Pollen durch Mikroorganismen im Boden vollständig abgebaut.

Nach einer weiteren bevorzugten Ausführungsform sind die Mehrzahl von Hohlelementen in mehreren, voneinander beabstandeten, im wesentlichen parallelen Ebenen angeordnet. Durch den wachsenden Abstand zwischen den Drainagerohren bei einer längeren Erstreckung derselben jeweils radial nach außen von einem in oder nahe der Mitte angeordneten Luftsammelschacht läßt sich bei bestimmten Geometrien der Ebene, innerhalb derer die Hohlelemente verlegt sind, insbesondere in einigen Metern Entfernung von dem Luftsammelschacht nicht mehr aus dem gesamten Erdspeicher, der aus dem Bett aus Feststoffpartikeln gebildet ist, die Luft gleichmäßig abziehen. Daher besitzen mehrere übereinander angeordnete Ebenen mit jeweils einer Mehrzahl von Hohlelementen den Vorteil, daß sich durch eine gezielte, versetzte Anordnung der Drainagerohre in den einzelnen voneinander beabstandeten Ebenen die Frischluft aus allen Bereichen des Bettes aus Feststoffpartikeln im wesentlichen gleichmäßig abziehen läßt.

### Kurze Beschreibung der Zeichnungen

Nachfolgend wird die Erfindung rein beispielhaft anhand der beigefügten Figuren beschrieben, wobei gleiche oder ähnliche Elemente in allen Darstellungen jeweils mit gleichen Referenzziffern bezeichnet sind. Im einzelnen zeigen:
- Fig. 1: eine schematische Darstellung der erfindungsgemäßen Vorrichtung mit einem angeschlossenen Wärmetauscher, wobei der Bereich des Luftsammelschachts in einem Vertikalschnitt dargestellt ist;
- Fig. 2: eine schematische Darstellung der erfindungsgemäßen Vorrichtung mit einem angeschlossenen Wärmetauscher, wobei der Bereich des Luftsammelschachts in einem Vertikalschnitt dargestellt ist und zusätzlich eine Berieselungsvorrichtung mit Grundwasser dargestellt ist; und
- Fig. 3: einen schematischen, vertikalen Schnitt durch einen Luftsammelschacht mit dem umgebenden Bett aus Feststoffpartikeln.

### Wege zur Ausführung der Erfindung

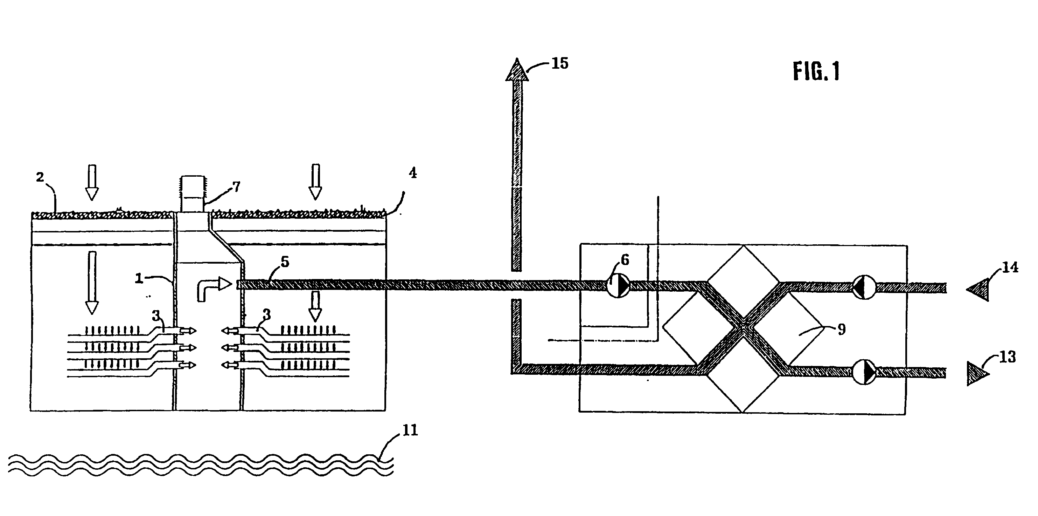

Bezugnehmend auf Fig. 1 ist eine schematische Schnittansicht einer Ausführungsform der erfindungsgemäßen Vorrichtung zum Gewinnen von Frischluft für Luftkonditionierungsanlagen dargestellt. Das Kernstück der Vorrichtung bildet ein Luftsammelschacht 1, der sich im wesentlichen senkrecht von der Erdoberfläche 2 nach unten erstreckt. Vorzugsweise wird der Luftsammelschacht aus Beton gefertigt, jedoch sind verschiedene andere Materialien wie auch nahezu beliebige Geometrien für den Luftsammelschacht 1 denkbar. Das untere Ende des Luftsammelschachtes 1 ist offen und befindet sich im Falle von Grundwassertiefen von ca. 5 Metern etwa 3 Meter unterhalb der Erdoberfläche 2.

Der Luftsammelschacht 1 besitzt eine luftdichte Wandung, in die lediglich die nachfolgend beschriebenen Drainagerohre 3 und die Luftabsaugleitung 5 eingeführt sind. Bei der in Fig. 1 dargestellten Ausführungsform ist zudem das obere Ende des Luftsammelschachtes 1, das bis zur Erdoberfläche 2 führt, mit einer Haube gegen die Außenatmosphäre verschlossen. Die Haube gestattet zum einen im Falle von Inspektions- und Wartungsarbeiten den Zutritt zum Luftsammelschacht, zum anderen kann diese in Abhängigkeit von der Außentemperatur geöffnet werden, so daß ein Zutritt von Außenluft in den Luftsammelschacht gestattet wird.

Die Drainageleitungen sind perforierte Kunststoffrohre, wie sie unter der Bezeichnung "Drain-Rohre" kommerziell erhältlich sind. Selbstverständlich lassen sich auch andere Materialien und Geometrien für die als Hohlelemente zum Auffangen der Luft dienenden Drainagerohre einsetzen. Wie in Fig. 1 dargestellt ist, befinden sich mehrere Drainagerohre übereinander in verschiedenen im wesentlichen horizontalen Lagen, wobei bevorzugt in jeder Lage eine Vielzahl von Drainagerohren, beispielsweise 20, angeordnet sind. Somit würde die in Fig. 1 dargestellte Vorrichtung beispielsweise etwa 60 Drainagerohre umfassen, die jeweils über ihrer Länge von etwa 5 Metern mit einer Vielzahl von Lufteintrittsöffnungen versehen sind, die in Fig. 1 nicht dargestellt sind.

Die Drainagerohre werden vollflächig innerhalb einer Lage verlegt, d.h. benachbarte Drainagerohre liegen entweder in berührendem Kontakt nebeneinander oder sind nur mit geringem Abstand zueinander verlegt. Dieser Abstand kann etwa dem einfachen bis dreifachen des Durchmessers der Drainagerohre betragen. Zudem ist die Lage der Drainagerohre bzw. sind die mehreren Lagen vorzugsweise parallel zur Erdoberfläche angeordnet. Hierdurch und durch die vollflächige Verlegung der Drainagerohre läßt sich das Volumen des darüber angeordneten Erdspeichers in bestmöglicher Weise nutzen.

Die Luftabsaugleitung 5 ist mit einem Ventilator 6 versehen, dessen Zug den für den Betrieb der Vorrichtung erforderlichen Druckverlust bereitstellt. Der Durchtrittsquerschnitt des Absaugrohres 5 richtet sich nach der aus dem Luftschacht zu fördernden Luftmenge.

Vorteilhafterweise befindet sich der Luftsammelschacht 1 im Zentrum der von diesem in sämtliche Richtungen ausgehenden Drainagerohre, wobei jedoch die Geometrie der Drainagerohre zueinander und jeweils zum Luftsammelschacht den speziellen baulichen Gegebenheiten angepaßt werden kann. So müssen die in einer im wesentlichen parallel zur Erdoberfläche verlaufenden Lage angeordneten Drainagerohre nicht gerade verlaufen und muß sich auch innerhalb des für die Vorrichtung zur Verfügung stehenden Bodenbereiches der Luftsammelschacht nicht im geometrischen Zentrum befinden.

Von der Erdoberfläche 2 bis zum unteren Teil des Luftsammelschachtes 1 erstreckt sich rings um den Luftsammelschacht und den Bereich der Erstreckung der Drainagerohre ein Bett aus Feststoffpartikeln und in unmittelbarer Nähe zur Erdoberfläche eine Humusschicht 4 oder ein anderes bewuchsförderndes Substrat, wie später eingehender erläutert wird. Auf der Humusschicht 4 beziehungsweise dem bewuchsfördernden Substrat schließlich befindet sich ein hochoberflächenbildender Bewuchs, beispielsweise eine Grasnarbe, die eine sehr hohe flächenbezogene Oberfläche aufweist.

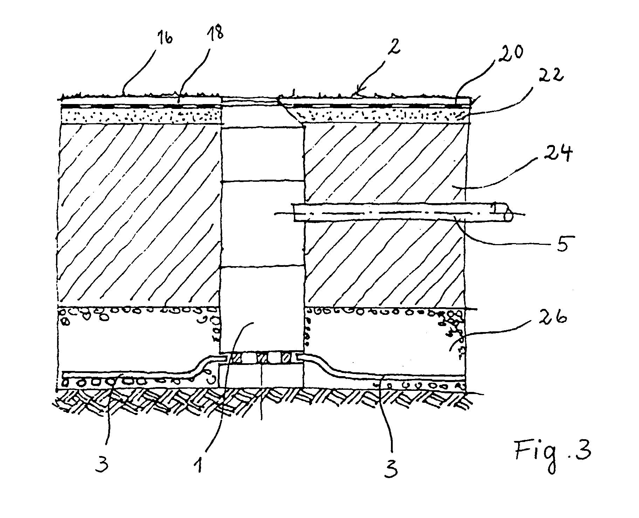

Das Bett aus Feststoffpartikel kann ein Kiesbett, oder aber auch eine Schicht eines adsorptiv wirkenden Stoffes darstellen, der eine große innere Oberfläche aufweist und Wasser binden kann. Hierfür können beispielsweise Schichten aus Ziegelbruch, Ziegelsplit, Blähton oder Lavasteinen zur Anwendung gelangen. In Fig. 3 unten wird ein konkretes Beispiel einer Schichtung dargestellt werden, wobei eine Schicht aus einem wasseradsorbierenden Material zwischen zwei Kiesschichten unterschiedlicher Rollierung eingebettet ist.

Die vorstehend beschriebene Vorrichtung mit Luftsammelschacht 1, im Erdreich oder einem Bett aus Feststoffpartikeln verlegten Drainagerohren 3 und einem an dem Luftsammelschacht 1 angeschlossenen Luftabsaugrohr 5 wird im folgenden auch als "Luftbrunnen" bezeichnet.

Wie in Fig. 1 ebenfalls dargestellt ist, durchläuft die aus dem Luftsammelschacht 1 entnommene abgesaugte Frischluft einen nachgeschalteten Wärmetauscher 9, in dem die Luft im Wärmeaustausch mit abgezogener Raumluft 14 steht, welche Wärme an die Frischluft abgibt, die schließlich als vorgewärmte Frischluft 13 direkt in einen zu klimatisierenden Raum eingeblasen oder vorher einer weiteren Luftkonditionierung unterworfen wird. Die im Wärmetauscher abgekühlte abgezogene Raumluft 14 verläßt als abgekühlte Abluft 15 den Wärmeaustauscher und gelangt in die Umgebung.

Bei der in Fig. 1 dargestellten Ausführungsform befindet sich der Grundwasserspiegel 11 ca. 1 bis 2 m unter dem unteren Ende des Luftsammelschachtes 1. Die Temperatur des Grundwassers stellt eine relativ konstante Größe dar, so daß diese zwischen Sommer und Winter nur um wenige Grad differiert. Um ein Beispiel zu nennen, liegt die Grundwassertemperatur in Deutschland bei ca. 12 ° im Sommer und 8 ° bis 10 ° im Winter. Der Wärmeaustausch zwischen dem Grundwasserstrom und dem darüberliegenden Bodengefüge dient dazu, daß im Fall der genannten Temperaturen der Luftbrunnen eine Frischluft mit einer unabhängig von den Jahreszeiten relativ konstanten Temperatur zwischen 8 ° und 12 ° fördert.

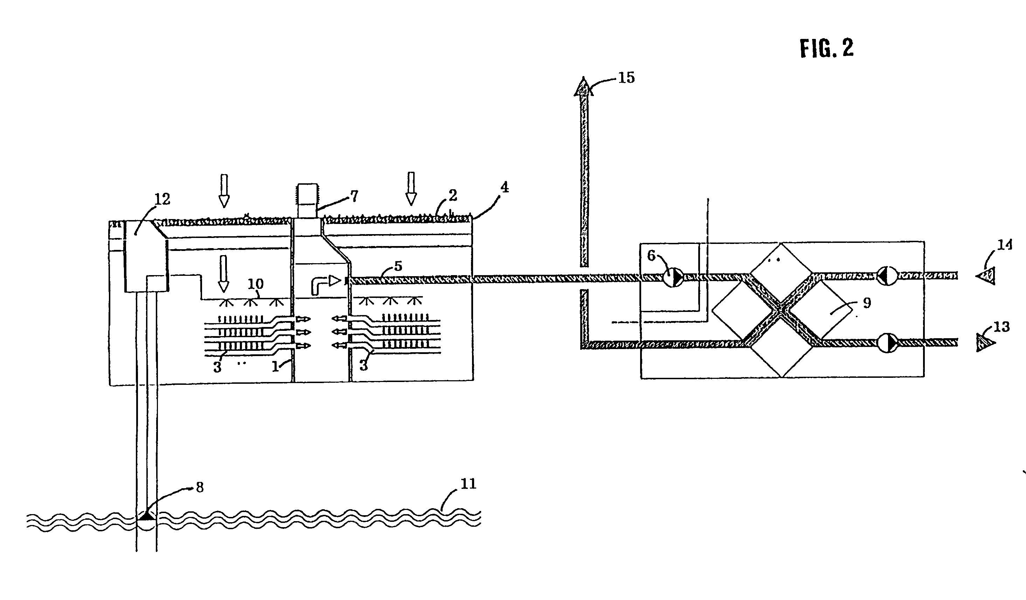

In Gegenden, in denen der Grundwasserspiegel deutlich tiefer liegt, reicht die vom Grundwasser 11 als natürlichen Energielieferanten gelieferte Heiz- bzw. Kühlenergie nicht mehr aus, um die gewünschte, im wesentlichen konstante Temperatur der aus dem Luftsammelschacht 1 geförderten Frischluft zu gewährleisten. Daher kann, wie in Fig. 2 dargestellt ist, zusätzlich eine in das Grundwasser 11 reichende Grundwasserpumpe 8 bereitgestellt werden, mit deren Hilfe Grundwasser in ein schematisch mit dem Bezugszeichen 10 bezeichnetes Grundwasserverteilsystem gefördert wird. Das Grundwasserverteilsystem 10 verläuft oberhalb der Drainagerohre 3 und ist mit einer Vielzahl von Wasseraustrittsöffnungen versehen, aus welchen eine definierte Menge des Grundwassers in den Boden im Bereich der Drainagerohre 3 eingebracht wird. Auf diese Weise kann mit Hilfe der Grundwasserpumpe 8 wiederum eine konstante Temperatur der vom Luftbrunnen geförderten Luft erzeugt werden.

Ebenfalls in Fig. 2 schematisch dargestellt ist ein Revisionsschacht 12 oberhalb der Grundwasserpumpe 8. Des weiteren kann der Betrieb der grundwasserpumpe 8 von einer nicht dargestellten Temperaturschaltung übernommen werden, welche beispielsweise auf die Temperatur der Luft in der Luftabsaugleitung hin die Fördermenge der Grundwasserpumpe 8 regelt.

Fig. 3 zeigt eine mögliche Schichtung verschiedener Bodengefügebestandteile im Bereich des Luftsammelschachtes 1 sowie der Drainagerohre 3. Wie bereits anhand der Fig. 1 dargelegt wurde, befindet sich auf der Erdoberfläche 2 zunächst eine Schicht eines hochoberflächenbildenden Bewuchses 16, wie beispielsweise Gras. Das Gras kann aus einer etwa 5 bis 10 cm starken Humusschicht 18 wachsen oder aber einem anderen geeigneten Bewuchsnährsubstrat, wie es beispielsweise in Kunststoffrasengitter eingefüllt werden kann und beispielsweise von der Firma Hauraton GmbH & Co. KG vertrieben wird. Diese lockeren Substratmischungen besitzen gegenüber der Verwendung einer Humusschicht den Vorteil, daß der Druckverlust beim Hindurchtreten der Frischluft geringer ist und sich hierdurch die Pressung des Ventilators und somit die erforderliche Leistung im Vergleich zu einer Humusschicht deutlich verringern läßt.

Unter der Humus- oder Substratschicht wird vorzugsweise eine dünne Vliesschicht 20 angeordnet, die ein Auswaschen der Erde nach unten verhindern soll. Unter der Vliesschicht 20 befindet sich eine Kiesschicht 22, wobei vorzugsweise eine nur sehr dünne Schicht von etwa 20 cm Dicke mit einer Rollierung 8/16 eingesetzt wird. An die Kiesschicht 20 schließt sich, in Bewegungsrichtung von der Erdoberfläche 2 senkrecht nach unten gesehen, eine über 2 m dicke Schicht an, die aus einem Stoff besteht, der eine große innere Oberfläche aufweist und Wasser adsorbieren kann. Hierfür können Ziegelbruch, Ziegelsplit, Blähton oder auch Lavasteine zum Einsatz gelangen. Diese Schicht wirkt zusätzlich zu den wärmespeichernden und wärmeübertragenden Wirkungen als Feuchtigkeitsregulanz, die eine konstante relative Feuchte der aus der Schicht 24 in die nachfolgend angeordnete Kiesschicht 26 durchtretende Frischluft sicherstellt. Für die unterhalb der Schicht 24 angeordneten Kiesschicht 26, die etwa eine Dicke von 1 m besitzt, wird vorzugsweise Kies mit einer Rollierung 16/32 eingesetzt.

Die Verwendung von mineralischen und hochwasserspeichernden Materialien erhöht die Wärmekapazität des Erdspeichers und führt zu einer deutlich höheren Kapazität der Feuchtigkeitsspeicherung für die Befeuchtung im Winter.

Nachfolgend wird der Betrieb der erfindungsgemäßen Vorrichtung beschrieben. Hierbei sind zwei Fälle zu unterscheiden, das Erwärmen von Luft sowie das Kühlen von Luft. Aufgrund der im wesentlichen konstanten Grundwassertemperatur wird bei der Verwendung des Luftbrunnens in einer klimatischen Zone, wie sie beispielsweise in Mitteleuropa vorliegt, über das ganze Jahr hindurch die Frischluft durch die Erdwärme und das Grundwasser auf etwa 10 ° bis 12 ° temperiert.

Beim Durchtritt der Luft durch die oben beschriebenen, verschiedenen Schichten wird zunächst mit in der Luft geführter Staub auf der Grasnarbe oder dem Oberflächenbewuchs abgeschieden, so daß die Luft im Boden staubfrei ist. In ähnlicher Weise setzen sich Pollen und Blütenstaub auf der Grasnarbe größtenteils ab. Die noch in der Luft befindlichen Pollen werden an die Feststoffe im Bett gebunden und von Mikroorganismen abgebaut. Des weiteren wirkt die Bodenschicht auch desinfizierend, da ebenfalls an die Feststoffe im Bett gebundene Bakterien in Schichten unter 2 m nicht länger als 50 Tage überleben können und aufgrund des Nahrungsmangels absterben. Das gleiche gilt für Pilzsporen, so daß die Frischluft beim Eintritt in die Drainagerohre nicht nur staubund pollen-, sondern auch keimarm ist.

Die Luft besitzt eine Verweildauer von ca. einer bis zwei Minuten im Bett aus Feststoffpartikeln vor dem Eintritt in die Drainagerohre. Diese Verweildauer ist ausreichend, um einen ausreichenden Wärme- und Stoffaustausch mit dem Erdspeicher in Form des Bettes aus Feststoffpartikeln sicherzustellen.

Während der Migration durch den Boden wird auch das Ozon in der Luft durch Oxydation mit reaktiven Feststoffen abgebaut.

Die Luft aus dem Luftbrunnen eignet sich somit auch für steril zu haltende Bereiche, z.B. in Krankenhäusern, für die Wohnräume von Pollenallergikern und für die Reinraumtechnik.

Einen wichtigen Gesichtspunkt stellt der Wasserhaushalt der den Luftbrunnen umgebenden Feststoffschicht dar. Durch den natürlichen Wasserhaushalt des Erdreichs und insbesondere die hohe Speicherkapazität möglicherweise verwendeter mineralischer Stoffe wird die vom Luftbrunnen geförderte Luft sehr hoch mit Wasser beladen. Die relative Feuchte der aus dem Luftschacht 1 mit einer Temperatur von etwa 12 ° geförderten Luft liegt bei etwa 90 %. Diese Feuchte wird außer durch das im Boden gespeicherte Regenwasser auch durch Tau geliefert, der sich auf dem hochoberflächenbildenden Bewuchs auf der Erdoberfläche absetzt. Durch die kühlende Wirkung bei der Verdunstung des insbesondere in der Nacht abgesetzten Taus auf der Erdoberfläche wird somit in heißen und ariden Regionen die Nachtkühle in bestmöglicher Weise zum Kühlen und gleichzeitig Befeuchten der Luft eingesetzt.

Die aus dem Luftsammelschacht geförderte Frischluft mit einer Temperatur von etwa 12 °C ist im Sommer deutlich kühler als die beispielsweise 25 bis 35 °C aufweisende Außenluft und im Winter deutlich wärmer als die bei Frostperioden beispielsweise -15 °C aufweisende Außenluft. Während im Sommer eine etwa 12 °C kühle Frischluft zur Verfügung steht, ohne daß diese Frischluft durch Energieeinsatz aus der warmen Außenluft gewonnen werden muß, steht im Winter bereits eine auf etwa 8 bis 12 °C vorerhitzte Luft zur Verfügung, wobei im obengenannten Fall einer Außentemperatur von -15 °C bereits eine Temperaturspanne von 25 K lediglich unter Energieeinsatz des Ventilators gewonnen werden.

Wie oben dargelegt wurde, besitzt aus dem Luftsammelschacht geförderte Luft etwa 90 % relative Feuchte. Nach dem Erwärmen dieser Luft auf etwa 22 °C zur Belüftung eines Raumes im Winter, hat sich die relative Luftfeuchte aufgrund der höheren Sättigung bei höheren Temperaturen auf etwa 40 % bis 55 % relative Luftfeuchte verringert. Dieser Bereich wird als besonders angenehm empfunden. Umgekehrt kommt es bei einer schwülwarmen Sommerluft, die eine sehr hohe Luftfeuchtigkeit aufweist, zu einer Entfeuchtung der Luft, da diese jeweils auf etwa 90 % relative Feuchte bei einer Temperatur von etwa 12 ° konditioniert wird, was jeweils zu der obengenannten relativen Luftfeuchte von etwa 40 bis 55 % nach dem Wärmeaustausch führt. Somit liegt die relative Luftfeuchte im sogenannten Komfortbereich.

Der Wärmeaustauscher 9 wird vorzugsweise als Kreuzstromwärmeaustauscher ausgeführt, in dem die aus dem Luftbrunnen geförderte Luft auf etwa 16 bis 18 °C erwärmt wird. Bei Verwendung des erfindungsgemäßen Luftbrunnens zusammen mit einem derartigen Wärmetauscher können Kältemaschinen bei einer normalen Raumluftkühlung gänzlich entfallen, was sich in einer beträchtlichen Energieeinsparung auswirkt.

Der am vorstehenden Ausführungsbeispiel beschriebene Luftbrunnen mit einer Kiesbettoberfläche von 24 m² (3 m x 8 m Kantenlänge) erbrachte bei einer Antriebsleistung des Ventilators 6 von 1400 W eine Fördermenge von 4000 m³/h von im Luftbrunnen auf 12,6 ° erwärmter Luft (Außenlufttemperatur + 2 °C). Generell kann beim Luftbrunnenprinzip ein Bedarf von etwa 6 m² Kiesbettoberfläche pro 1000 m³/h konditionierter Luft zugrunde gelegt werden. Wird anstelle einer Humusschicht ein Substrat mit größerer Porosität gewählt, so kann die Antriebsleistung des Ventilators auf etwa 600 W verringert werden.

Durch die vorliegende Erfindung wird die Speicherkapazität des gesamten Bettes aus Feststoffpartikeln in vollem Umfange genutzt und somit die Austauschfläche zum Grundwasser um ein Vielfaches vergrößert. Zudem wird durch die dezentrale Aufnahme der Frischluft durch eine große Anzahl von Lufteinlaßöffnungen trotz der relativ hohen Fördermenge an Luft eine sehr hohe Verweilzeit der Luft im Boden von einigen Minuten sichergestellt, wodurch neben den Wärme- und Stoffaustauschvorgängen, die in relativ kurzen Zeiträumen ablaufen, auch die gewünschten Luftreinigungs- und Entkeimungswirkungen erzielt werden können.

## Patentansprüche

1. Vorrichtung zum Behandeln und Gewinnen von Frischluft in einer Luftfördereinrichtung, umfassend:
- ein Bett (22, 24, 26) aus Feststoffpartikeln unter einer Grenzfläche zum freien Luftraum angeordnet ;
- einen Luftsammelschacht (1) im Bett; und
- eine Luftabsaugleitung (5), die mit dem Luftsammelschacht (1) verbunden ist;
dadurch **gekennzeichnet,** daß
- eine Mehrzahl von langgestreckten Hohlelementen (3), die jeweils eine Vielzahl von Lufteinlaßöffnungen aufweisen, in den Luftsammelschacht (1) münden;
- der Luftsammelschacht (1) nur über die Hohlelemente (3) mit der Frischluft im Bett (22, 24, 26) aus Feststoffpartikeln in Strömungsverbindung steht; und
- die Grenzfläche (2) aus einem hochoberflächenbildenden Bewuchs (18) gebildet ist,
wobei die Grenzfläche (2) den Eintrittsbereich der angesangten Luft darstellt.

2. Vorrichtung nach Anspruch 1,
dadurch **gekennzeichnet**, daß
- die langgestreckten Hohlelemente perforierte Kunststoffrohre (3) sind.

3. Vorrichtung nach einem der Ansprüche 1 und 2,
dadurch **gekennzeichnet**, daß
- in der Luftabsaugleitung (5) eine Luftfördereinrichtung, vorzugsweise ein Ventilator (6) angeordnet ist.

4. Vorrichtung nach einem der Ansprüche 1 bis 3,
dadurch **gekennzeichnet**, daß
die Luftabsaugleitung (5) an einem Wärmeaustauscher (9) einer Luftkonditionierungseinrichtung angeschlossen ist.

5. Vorrichtung nach einem der Ansprüche 1 bis 4,
dadurch **gekennzeichnet**, daß
der Luftsammelschacht (1) senkrecht zur Erdoberfläche (2) orientiert in dem Bett (22, 24, 26) aus Feststoffpartikeln aufgenommen ist.

6. Vorrichtung nach Anspruch 5,
dadurch **gekennzeichnet**, daß
das obere Ende des Luftsammelschachtes (1) sich im wesentlichen bis zur Erdoberfläche erstreckt.

7. Vorrichtung nach Anspruch 5 oder 6,
dadurch **gekennzeichnet**, daß
das obere Ende des Luftsammelschachtes (1) mit einer in Abhängigkeit von der Außentemperatur zu öffnenden Abdeckung (7) verschlossen ist, die im geöffneten Zustand den Zutritt von Außenluft in den Luftsammelschacht (1) gestattet.

8. Vorrichtung nach einem der Ansprüche 1 bis 7,
dadurch **gekennzeichnet**, daß
die langgestreckten Hohlelemente (3) eine Ebene, die im wesentlichen parallel zur Erdoberfläche verläuft, vollflächig ausfüllen.

9. Vorrichtung nach einem der Ansprüche 1 bis 8,
dadurch **gekennzeichnet**, daß
eine Grundwasserpumpe (8) vorgesehen ist, mit deren Hilfe Grundwasser in das Bett (22, 24, 26) aus Feststoffpartikeln förderbar ist.

10. Vorrichtung nach einem der Ansprüche 1 bis 9,
dadurch **gekennzeichnet**, daß
das Bett (22, 24,26) aus Feststoffpartikeln einen oder mehrere der folgenden Feststoffbestandteile aufweist: Kies, Ziegelbruch, Ziegelsplit, Blähton und Lavasteine.

11. Vorrichtung nach Anspruch 10,
dadurch **gekennzeichnet**, daß
sich im Bett (22, 24, 26) in Richtung senkrecht zur Erdoberfläche eine Schicht (24) aus Ziegelbruch, Ziegelsplit, Blähton oder Lavasteine zwischen zwei Kiesschichten (22, 26) befindet.

12. Vorrichtung nach einem der Ansprüche 1 bis 11,
dadurch **gekennzeichnet**, daß
die Mehrzahl von Hohlelementen (3) in mehreren voneinander beabstandeten, jeweils im wesentlichen horizontalen Ebenen angeordnet sind.

13. Verfahren zum Behandeln und Gewinnen von Frischluft umfassend die folgenden Schritte:
- Durchströmen der Frischluft durch die Erdoberfläche (24) mit einer Oberflächenstruktur hoher spezifischer Fläche;
- Durchströmen der Frischluft durch ein Bett (22,24,26) aus Feststoffpartikeln;
- Einströmen der Frischluft durch Lufteinlaßöffnungen in eine Vielzahl von langgestreckten Hohlelementen (3), und die in einen Luftsammelschacht münden, wobei der Luftsammelschacht (1) nur über die Hohlelemente (3) mit der Frischluft im Bett (22, 24, 26) aus Feststoffpartikeln in Strömungsverbindung steht; und
- Einströmen der Frischluft in den Luftsammelschacht (1).

14. Verfahren nach Anspruch 13, weiter umfassend:
- Abziehen der Frischluft aus dem Luftsammelschacht durch eine Luftabsaugleitung; und
- Temperieren der Frischluft in einem Wärmeaustauscher.

## Claims

1. Device for treating and producing fresh air in an air delivery system including:
- a bed (22, 24, 26) of solid particles under a contact surface to an open air space.
- an air collector shaft (1) in the bed and
- an air suction pipe (5), which is connected to the air collector shaft (1);
**characterized** by the fact that
- a majority of elongated hollow elements (3), each of which have many air inlet openings, empty into the air collector shaft (1);
- the air collector shaft (1) is only connected to the fresh air in the bed (22, 24, 26) of solid particles through the hollow elements (3); and
- the contact surface (2) is formed by vegetation (18) that forms a high surface, whereby the contact surface (2) represents the entrance area for the air that is sucked up.

2. Device according to claim 1,
**characterized** by the fact that
- the elongated hollow elements are perforated plastic pipes (3).

3. Device according to one of claims 1 and 2,
**characterized** by the fact that
- an air delivery system, preferably a ventilator, is positioned in the air suction pipe (5).

4. Device according to one of claims 1 to 3,
**characterized** by the fact that
- the air suction pipe (5) is connected to a heat exchanger (9) of an air conditioning device.

5. Device according to one of claims 1 to 4,
**characterized** by the fact that
- the air collector shaft (1) is installed so that it is perpendicular oriented to the earth surface (2) in the bed (22, 24, 26) of solid particles.

6. Device according to claim 5,
**characterized** by the fact that
the upper end of the air collector shaft (1) essentially extends up to the earth surface.

7. Device according to claim 5 or 6,
**characterized** by the fact that
the upper end of the air collector shaft (1) is closed by a cover (7) that can be opened depending on the outside temperature and that allows the outside air to enter into the air collector shaft (1) when opened.

8. Device according to one of claims 1 to 7,
**characterized** by the fact that
the elongated hollow elements (3) fill a plane all over, and the plane basically runs parallel to the earth surface.

9. Device according to one of claims 1 to 8,
**characterized** by the fact that
a ground water pump (8) is provided with whose help ground water can be transported into the bed (22, 24, 26) made of solid particles,

10. Device according to one of claims 1 to 9,
**characterized** by the fact that
the bed (22, 24, 26) of solid particles includes one or several of the following solid matter components: fine gravel, brick bits, brick chips, expanded clay, and lava stone.

11. Device according to claim 10,
**characterized** by the fact that
a layer (24) made of brick bits, brick chips, expanded clay, or lava stone is located in the bed (22, 24, 26) in a direction perpendicular to the earth surface between two layers of fine gravel (22, 26).

12. Device according to one of claims 1 to 11,
**characterized** by the fact that
the majority of hollow elements (3) are positioned at intervals in several planes that are essentially horizontal.

13. Process for treating and producing fresh air that includes the following steps:
- fresh air flowing through the earth surface (2,4) with a high specific surface structure;
- fresh air flowing through a bed (22, 24, 26) made of solid particles;
- fresh air flowing in through air inlet openings in a majority of elongated hollow elements (3), which empty into an air collector shaft, whereby the air collector shaft (1) is only connected to the fresh air in the bed (22, 24, 26) of solid particles through the hollow elements (3); and
- fresh air flowing into the air collector shaft (1).

14. Process according to claim 13, which includes the following additional steps:
- the discharge of the fresh air from the air collector shaft through an air suction pipe and
- the adjustment of the fresh air to a certain temperature in a heat exchanger.

## Revendications

1. Dispositif pour le traitement et la production d'air frais dans une installation de transport d'air, comprenant :
- un lit (22, 24, 26) formé de particules de matière solide en dessous d'un interface avec l'air libre,
- une cheminée collectrice d'air (1) dans le lit, et
- une conduite d'extraction d'air (5) qui est reliée à la cheminée collectrice d'air (1),
caractérisé par le fait que
- une pluralité d'éléments creux (3) allongés présentant chacun une multitude d'ouvertures d'entrée d'air débouchent dans la cheminée collectrice d'air (1),
- la cheminée collectrice d'air (1) ne se trouve en communication, du point de vue écoulement, que par les éléments creux (3) avec l'air frais dans le lit (22, 24, 26) de particules de matière solide, et
- l'interface (2) est constituée par une végétation (17) développant une grande surface, l'interface (2) représentant la zone d'entrée de l'air aspiré.

2. Dispositif suivant la revendication 1,
caractérisé par le fait que
les éléments creux allongés sont des tubes (3) en matière plastique, perforés.

3. Dispositif suivant l'une des revendications 1 et 2,
caractérisé par le fait
qu'un dispositif de transport d'air, de préférence un ventilateur (6), est disposé dans la conduite d'extraction d'air (5).

4. Dispositif suivant l'une des revendications 1 à 3,
caractérisé par le fait
que la conduite d'extraction d'air (5) est raccordée à un échangeur de chaleur (9) d'une installation de conditionnement d'air.

5. Dispositif suivant l'une des revendications 1 à 4,
caractérisé par le fait que
la cheminée collectrice d'air (1) est disposée dans le lit (22, 24, 26) de particules de matière solide en étant orientée perpendiculairement à la surface de la terre (2).

6. Dispositif suivant la revendication 5,
caractérisée par le fait que l'extrémité supérieure de la cheminée collectrice d'air (1) s'étend sensiblement jusqu'à la surface de la terre.

7. Dispositif suivant la revendication 5 ou 6,
caractérisé par le fait que l'extrémité supérieure de la cheminée collectrice d'air (1) est fermée à l'aide d'un élément d'obturation (7) s'ouvrant en fonction de la température ambiante, cet élément permettant, à l'état ouvert, l'admission d'air ambiant dans la cheminée collectrice d'air (1).

8. Dispositif suivant l'une des revendications 1 à 7,
caractérisé par le fait que
les éléments creux (3) allongés occupent complètement un plan qui s'étend essentiellement parallèlement à la surface de la terre.

9. Dispositif suivant l'une des revendications 1 à 8,
caractérisé par le fait que
il est prévu une pompe d'eau souterraine (8) à l'aide de laquelle les eaux souterraines peuvent être envoyées dans le lit (22, 24, 26) de particules de matière solide.

10. Dispositif suivant l'une des revendications 1 à 9,
caractérisé par le fait que
le lit (22, 24, 26) de particules de matière solide présente un ou plusieurs des constituants de matière solide suivants : gravier, débris de briques, briques concassées, argile expansée et pierres de lave.

11. Dispositif suivant la revendication 10,
caractérisé par le fait que
le lit (22, 24, 26) contient, dans une direction perpendiculaire à la surface de la terre, une couche (24) de débris de briques, de briques concassées, d'argile expansée ou de pierres de lave entre deux couches de gravier (22, 26).

12. Dispositif suivant l'une des revendications 1 à 11,
caractérisé par le fait que
la pluralité d'éléments creux (3) sont disposés dans plusieurs plans essentiellement horizontaux, espacés les uns des autres.

13. Procédé pur le traitement et la production d'air frais, comprenant les étapes suivantes :
- passage de l'air frais à travers la surface de la terre (2, 4) ayant une structure superficielle à grande surface spécifique,
- passage de l'air frais à travers un lit (22, 24, 26) de particules de matière solide,
- passage de l'air frais par des ouvertures d'entrée d'air dans une pluralité d'éléments creux (3) allongés, débouchant dans une cheminée collectrice d'air, la cheminée collectrice d'air (1) se trouvant en communication du point de vue écoulement uniquement par les éléments creux (3) avec l'air frais dans le lit (22, 24, 26) de particules de matière solide, et
- passage de l'air frais dans la cheminée collectrice d'air (1).

14. Procédé suivant la revendication 13, comprenant en outre les étapes de :
- extraction de l'air frais de la cheminée collectrice d'air par une conduite d'extraction d'air, et
- passage de l'air frais dans un échangeur de chaleur.
